# EUROPEAN PATENT APPLICATION

(11) **EP 4 835 455 A1**
(43) Date of publication of application: **04.11.2026**
(21) Application number: 24911109.7
(22) Date of filing: 24.12.2024
(51) Int. Cl.: G01N 23/02

(54) **MOBILE INSPECTION DEVICE AND MOBILE INSPECTION SYSTEM**

(30) Priority: 26.12.2023 CN 202311810348
(71) Applicant: Nuctech Company Limited, TongFang Building Shuangqinglu Haidian District Beijing 100084 (CN); Nuctech (Beijing) Company Limited, Beijing 101500 (CN)
(72) Inventor: YANG, Yang, Beijing 100084 (CN); SHI, Junping, Beijing 100084 (CN); SONG, Quanwei, Beijing 100084 (CN); FAN, Xuping, Beijing 100084 (CN); MENG, Hui, Beijing 100084 (CN)
(74) Representative: Cabinet Beau de Loménie
(86) International application number: PCT/CN2024/141804
(87) International publication number: WO 2025/140184

(57) **Abstract**

A mobile inspection device and a mobile inspection system are provided. The mobile inspection device includes: a mobile body (1), a rear cabin (2), an accelerator cabin (3) and a detector arm (5), where the mobile inspection device has a container truck scanning mode and a train scanning mode that are switchable between each other; where the rear cabin (2) is rotatably disposed on the mobile body (1), and the rear cabin (2) is configured to rotate to a counterweight position in the container truck scanning mode and rotate to a retracted position in the train scanning mode; the detector arm (5) is disposed on the mobile body (1), and the detector arm (5) is provided with a first detector (6); the detector arm (5) is configured to have a folded state and a deployed state, and the detector arm (5) is in the deployed state in the container truck scanning mode and in the folded state in the train scanning mode; and the accelerator cabin (3) is disposed in the rear cabin (2), and the accelerator cabin (3) is configured to emit radiation beams from a first beam outlet (201) and a second beam outlet (202) of the rear cabin (2) in the container truck scanning mode and the train scanning mode, respectively.

## Description

### CROSS REFERENCE TO RELATED APPLICATION(S)

This application claims priority to Chinese Patent Application No. 202311810348.2, filed on December 26, 2023, the entire content of which is incorporated herein by reference.

### TECHNICAL FIELD

The present disclosure relates to a field of inspection, and in particular to a mobile inspection device and a mobile inspection system.

### BACKGROUND

In the related art, a radiation scanning inspection system may include a fixed inspection system and a mobile inspection system. For a moving train, the fixed inspection system is often used for non-stop inspection. For example, a radiation emitter and a detector are respectively provided on both sides of a railway track to perform inspection detection on a train to be inspected. However, a conventional fixed inspection system often has the following drawbacks. First, in order to meet radiation protection requirements, permanent radiation shielding facilities often need to be built around the fixed inspection system, which occupy a large land area and incur high costs. In addition, a larger station has a greater number of inbound and outbound tracks, leaving a limited available space. Given high costs of a scanning detection device, an increase in the number of fixed inspection systems may also lead to a significant rise in equipment costs and maintenance costs. For a small station with fewer train services, the fixed inspection system often remains idle, resulting in equipment waste.

On the other hand, the mobile inspection system is generally a vehicle-mounted radiation inspection system, and generally includes, located in a vehicle cabin, a radiation emitter and a detector arm equipped with detectors. Through extension and retraction of the detector arm, in cooperation with the radiation emitter, a target may be conveniently detected. The system is commonly used for transmission inspection of container trucks. However, a conventional vehicle-mounted radiation inspection system may not be applied to the inspection of trains at stations. This is because the detector arm of the mobile radiation inspection system cannot deploy to span across tracks, particularly a plurality of tracks, and cannot be disposed over the train. That is, the detector arm of the mobile radiation inspection system cannot form an inspection passage through which the train may pass. In addition, some tracks are provided with high-voltage cables overhead, which may prohibit the deployment of the detector arm.

Therefore, there is an urgent need to address how to improve the monitoring efficiency of train stations while maintaining or reducing equipment costs.

### SUMMARY

According to an inventive concept of an aspect of the present disclosure, a mobile inspection device is provided, including a mobile body, a rear cabin, an accelerator cabin and a detector arm, where the mobile inspection device has a container truck scanning mode and a train scanning mode that are switchable between each other; where the rear cabin is rotatably disposed on the mobile body, and the rear cabin is configured to rotate to a counterweight position in the container truck scanning mode and rotate to a retracted position in the train scanning mode; the detector arm is disposed on the mobile body, and the detector arm is provided with a first detector; the detector arm is configured to have a folded state and a deployed state, and the detector arm is in the deployed state in the container truck scanning mode and in the folded state in the train scanning mode; and the accelerator cabin is disposed in the rear cabin, and the accelerator cabin is configured to emit radiation beams from a first beam outlet and a second beam outlet of the rear cabin in the container truck scanning mode and the train scanning mode, respectively.

According to some embodiments of the present disclosure, in the container truck scanning mode, the accelerator cabin is configured to be fixed in the rear cabin, and the rear cabin is configured to rotate synchronously with the accelerator cabin relative to the mobile body, so as to achieve counterweight balance between the rear cabin and the detector arm.

According to some embodiments of the present disclosure, in the train scanning mode, the accelerator cabin is configured to emit the radiation beam from the second beam outlet toward a second detector at a predetermined position.

According to some embodiments of the present disclosure, in the train scanning mode, the rear cabin is configured to be stationary relative to the mobile body, and the accelerator cabin is configured to rotate relative to the rear cabin, so as to emit the radiation beam from the second beam outlet toward the second detector at the predetermined position.

According to some embodiments of the present disclosure, an accelerator in the accelerator cabin includes a transmission target, and the accelerator cabin is provided with a first collimator and a second collimator corresponding to the first beam outlet and the second beam outlet respectively; and in the container truck scanning mode, the accelerator is configured such that electrons in an acceleration tube interact with the transmission target to generate a radiation beam, and the radiation beam is emitted from the first beam outlet via the first collimator.

According to some embodiments of the present disclosure, an accelerator in the accelerator cabin includes a transmission target, and the accelerator cabin is provided with a first collimator and a second collimator corresponding to the first beam outlet and the second beam outlet respectively; and in the train scanning mode, the accelerator is configured such that electrons in an acceleration tube interact with the transmission target to generate a radiation beam, and the radiation beam is emitted from the second beam outlet via the first collimator.

According to some embodiments of the present disclosure, an accelerator in the accelerator cabin includes a reflection target, and the accelerator cabin is provided with a first collimator and a second collimator corresponding to the first beam outlet and the second beam outlet respectively; and in the train scanning mode, the accelerator is configured such that electrons in an acceleration tube interact with the reflection target to generate a radiation beam, and the radiation beam is emitted from the second beam outlet via the second collimator.

According to some embodiments of the present disclosure, a beam emission direction of the radiation beam via the first beam outlet is perpendicular to a beam emission direction of the radiation beam via the second beam outlet.

According to an inventive concept of another aspect of the present disclosure, a mobile inspection system is further provided, including: the mobile inspection device as described above; and a second detector disposed on a carrier independent of the mobile body. The carrier is a mobile carrier or a fixed carrier.

### BRIEF DESCRIPTION OF THE DRAWINGS

FIG. 1 shows three views and a partial enlarged view of a mobile inspection device in a container truck scanning mode according to an exemplary embodiment of the present disclosure;
FIG. 2 shows a front view and a top view of a mobile inspection device in one train scanning mode according to an exemplary embodiment of the present disclosure;
FIG. 3 shows a front view and a top view of a mobile inspection device in another train scanning mode according to an exemplary embodiment of the present disclosure;
FIG. 4 shows three views of a mobile inspection device in a transportation mode according to an exemplary embodiment of the present disclosure; and
FIG. 5 shows a schematic structural diagram of a rotating assembly of the mobile inspection device shown in FIG. 1.

In the above accompanying drawings, the specific meanings of reference numerals are as follows:
1 - mobile body;
2 - rear cabin;
201 - first beam outlet;
202 - second beam outlet;
3 - accelerator cabin;
   301 - first collimator;
   302 - second collimator;
5 - detector arm;
   501 - first support arm;
   502 - horizontal support arm;
   503 - vertical detection arm;
6 - first detector;
7 - train;
8 - container truck;
9 - fixed ring;
10 - slewing ring gear;
11 - fixed detector;
12 - drive assembly.

### DETAILED DESCRIPTION OF EMBODIMENTS

In order to make objectives, technical solutions and advantages of the present disclosure clearer, the present disclosure will be further described in detail below with reference to specific embodiments and accompanying drawings.

It should be understood, however, that these descriptions are merely exemplary and are not intended to limit the scope of the present disclosure. In the following detailed description, for purposes of explanation, many specific details are set forth to provide a thorough understanding of embodiments of the present disclosure. However, obviously, one or more embodiments may be practiced without these specific details. In addition, in the following description, descriptions of well-known technologies are omitted to avoid unnecessarily obscuring the concept of the present disclosure.

Terms used herein are only intended to describe specific embodiments and are not intended to limit the present disclosure. Terms "include" and "comprise" used herein indicate the presence of the features, steps and operations, but do not exclude the presence or addition of one or more other features, steps and operations.

All terms (including technical and scientific terms) used herein have meanings generally understood by those skilled in the art, unless otherwise defined. It should be noted that the terms used herein should be interpreted as having the meaning consistent with the context of the present disclosure, and should not be interpreted in an idealized or overly rigid manner.

In order to solve problems in the related art that a mobile inspection system has a small scope of application and low working efficiency, and a fixed inspection system in train stations has a long construction period, large land occupation, a high equipment cost, and a low equipment utilization rate, in the present disclosure, by improving a related mobile inspection device to enable it to cooperate with a detector arm of a related fixed train inspection device to independently perform scanning inspection on a moving train, a land occupation area of the inspection system in the train station may be reduced, and equipment investment costs may also be reduced. Moreover, the mobile inspection device itself may still perform scanning of container trucks and have strong mobility, which may further improve utilization rate of the equipment, reduce equipment investment, and expand the scope of application of the equipment.

The present disclosure provides a mobile inspection device and a mobile inspection system. With only one mobile inspection device, in cooperation with a detector arm suitable for a train-related inspection device, the mobile inspection device may achieve, in addition to conventional container truck scanning, rapid relocation and a dual-scanning mode applicable to train scanning, thereby expanding the scope of application of the related mobile inspection device.

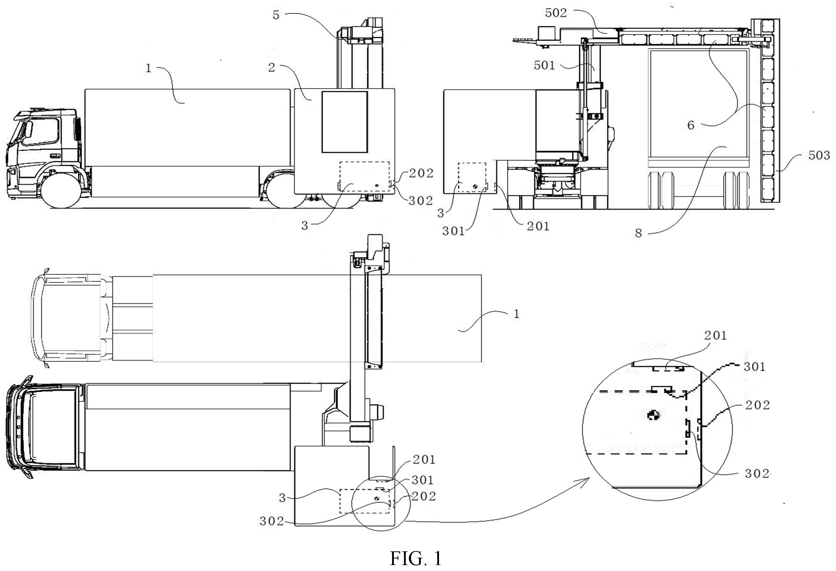

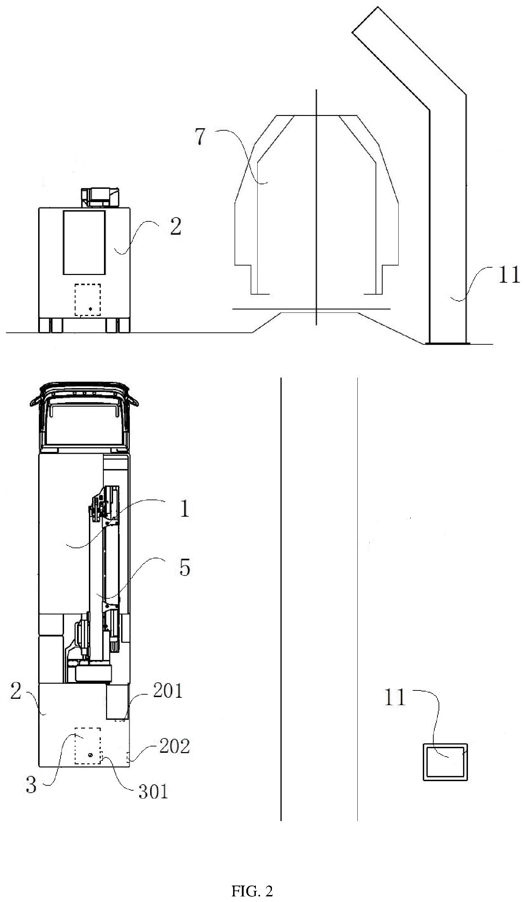

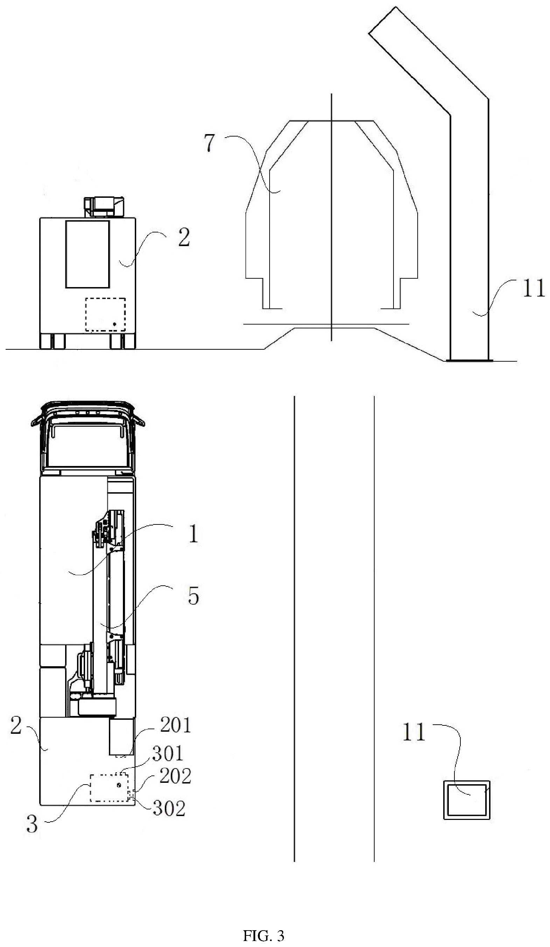

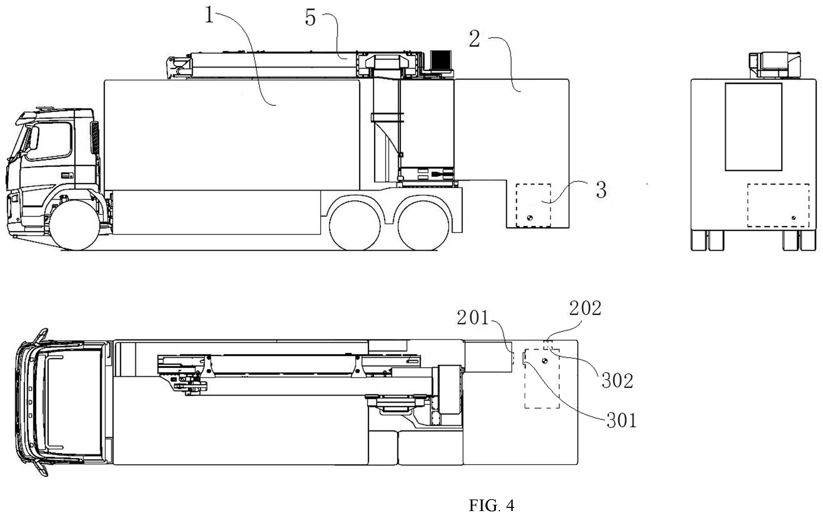

FIG. 1 shows three views and a partial enlarged view of a mobile inspection device in a container truck scanning mode according to an exemplary embodiment of the present disclosure; FIG. 2 shows a front view and a top view of a mobile inspection device in one train scanning mode according to an exemplary embodiment of the present disclosure; FIG. 3 shows a front view and a top view of a mobile inspection device in another train scanning mode according to an exemplary embodiment of the present disclosure; and FIG. 4 shows three views of a mobile inspection device in a transportation mode according to an exemplary embodiment of the present disclosure.

According to an inventive concept of an aspect of the present disclosure, a mobile inspection device is provided, including a mobile body 1, a rear cabin 2, an accelerator cabin 3 and a detector arm 5, where the mobile inspection device has a container truck scanning mode and a train scanning mode that are switchable between each other. The rear cabin 2 is rotatably disposed on the mobile body 1, and the rear cabin 2 is configured to rotate to a counterweight position in the container truck scanning mode and rotate to a retracted position in the train scanning mode. The detector arm 5 is disposed on the mobile body 1, and the detector arm 5 is provided with a first detector 6. The detector arm 5 is configured to have a folded state and a deployed state, and the detector arm 5 is in the deployed state in the container truck scanning mode and in the folded state in the train scanning mode. The accelerator cabin 3 is disposed in the rear cabin 2, and the accelerator cabin 3 is configured to emit radiation beams from a first beam outlet 201 and a second beam outlet 202 of the rear cabin 2 in the container truck scanning mode and the train scanning mode, respectively.

In this embodiment, by providing the rear cabin 2 with the first beam outlet 201 and the second beam outlet 202, and by configuring the rear cabin 2 to rotate to the counterweight position in the container truck scanning mode and rotate to the retracted position in the train scanning mode, the accelerator cabin 3 of the mobile inspection device emits radiation beams from two directions respectively in the container truck scanning mode and the train scanning mode, and scans container trucks or trains through the first beam outlet 201 and the second beam outlet 202 respectively, thereby achieving the use of only one mobile inspection device in two application scenarios, and expanding the scope of application of the mobile inspection device.

According to some embodiments of the present disclosure, as shown in FIGS. 1 and 4, in the transportation mode of the mobile inspection device, referring to the top view in FIG. 4, geometric centers of gravity of both the accelerator cabin 3 and the detector arm 5 are substantially located on a central axis of the mobile body 1. Here, referring to FIG. 4, the left side of the mobile body 1 is defined as a passenger side, and the right side of the mobile body 1 is defined as a driver side. The first beam outlet 201 is provided on a side surface of the rear cabin 2 along a traveling direction of the mobile body, and the second beam outlet 202 is provided on a side surface of the rear cabin 2 on the passenger side. An orientation of the first beam outlet 201 is perpendicular to an orientation of the second beam outlet 202.

According to some embodiments of the present disclosure, in the container truck scanning mode, as shown in FIG. 1, the accelerator cabin 3 is configured to be fixed in the rear cabin 2, and the rear cabin 2 is configured to rotate synchronously with the accelerator cabin 3 relative to the mobile body 1. That is, during the rotation process of the rear cabin 2, the accelerator cabin 3 remains stationary relative to the rear cabin 2, while the detector arm 5 may rotate in the opposite direction at the same time, so as to achieve counterweight balance between the entire rear cabin 2 and the detector arm 5 during the rotation process, thereby preventing the mobile body 1 from tipping over.

In this embodiment, the rear cabin 2 and the detector arm 5 are driven to move to two sides of the mobile body 1, such that an accelerator in the accelerator cabin 3 in the rear cabin 2 is disposed opposite to the first detector 6 in the detector arm 5, and an inspection passage suitable for container trucks is formed therebetween.

In this embodiment, referring to the top views in FIGS. 1 and 4, the rear cabin 2 is rotated clockwise (about 90°) from the transportation mode in FIG. 4 to the container truck scanning mode in FIG. 1. At this time, the first beam outlet 201 of the rear cabin 2 faces the passenger side, and the second beam outlet 202 faces the rear side in a moving direction of the mobile body. The first collimator 301 of the accelerator cabin 3 is opposite to or aligned with the first beam outlet 201, whereby a radiation beam generated by the accelerator in the accelerator cabin 3 is emitted from the first beam outlet 201 via the first collimator 301. At this time, a beam emission direction of the radiation beam is substantially perpendicular to the moving direction of the mobile body 1. In the container truck scanning mode, a deployed detector arm 5 and the accelerator cabin 3 are respectively located on two sides of the central axis of the mobile body 1, thereby achieving the overall counterweight balance of the mobile inspection device.

According to some embodiments of the present disclosure, as shown in FIG. 1, the detector arm 5 includes: a first support arm 501, a horizontal support arm 502, and a vertical detection arm 503. The first support arm 501 may be hingedly connected at one end to the rear cabin 2, and configured to rotate synchronously with the rear cabin 2. One end of the horizontal support arm 502 is connected to the other end of the first support arm 501. The vertical detection arm 503 is hingedly connected to the other end of the horizontal support arm 502. The first detector 6 may be disposed on the vertical detection arm 503 and the horizontal support arm 502. It should be noted that in the transportation mode of the mobile inspection device, the first support arm 501, the horizontal support arm 502, and the vertical detection arm 503 included in the detector arm 5 are in a folded state and are completely retracted within a width range of the mobile body, so as to comply with road transportation regulatory requirements. It should be noted that in the train scanning mode of the mobile inspection device described below, the first support arm 501, the horizontal support arm 502, and the vertical detection arm 503 included in the detector arm 5 are also in a folded state.

According to some embodiments of the present disclosure, the deploying process of the detector arm 5 may be as follows: the first support arm 501 drives the horizontal support arm 502 and the vertical detection arm 503 to lift in a vertical direction, or the first support arm 501 rotates by a certain angle (e.g., 90°) relative to the rear cabin 2 or the mobile body 1 in a plane perpendicular to the moving direction of the mobile body 1, so as to drive the horizontal support arm 502 and the vertical detection arm 503 to lift, and is then driven to rotate by approximately 90°. Subsequently, the vertical detection arm 503 is deployed, such that the first support arm 501, the horizontal support arm 502, and the vertical detection arm 503 are changed from a folded state to a deployed state. The horizontal support arm 502 and the vertical detection arm 503 move to one side of the mobile body 1. At this time, the first support arm 501, the horizontal support arm 502, and the vertical detection arm 503 together with the mobile body 1 form a frame-shaped scanning structure, and a container truck 8 to be scanned passes through the frame-shaped scanning structure for inspection.

According to some embodiments of the present disclosure, as shown in FIG. 2, in one train scanning mode, the accelerator cabin 3 is configured to emit the radiation beam from the second beam outlet 202 toward a second detector 11 at a predetermined position.

According to some optional embodiments of the present disclosure, in one train scanning mode, the rear cabin 2 is configured to remain stationary relative to the mobile body 1, and the accelerator cabin 3 is configured to rotate relative to the rear cabin 2. For example, as shown in FIG. 2, the accelerator cabin 3 rotates clockwise by 90°, such that the radiation beam generated by the accelerator in the accelerator cabin 3 is emitted from the second beam outlet 202 via the first collimator 301 toward the second detector 11 at the predetermined position or at a predetermined distance. It should be noted that the second detector 11 may be fixedly disposed on one side of a railway track, or moved to one side of the railway track via other mobile carriers (e.g., an AGV), and at this time, the mobile inspection device is located on the other side of the railway track. FIG. 2 shows a case where the number of railway tracks is two, although present disclosure is not limited thereto.

In this embodiment, the accelerator cabin 3 is connected to the rear cabin 2 via a rotating assembly, and a drive device drives the accelerator cabin 3 to rotate relative to the rear cabin 2, such that the first collimator 301 of the accelerator cabin 3 is aligned with the second beam outlet 202 as required, thereby achieving direct switching from the transportation mode to the train scanning mode.

According to some embodiments of the present disclosure, as shown in FIG. 3, in another train scanning mode, the accelerator cabin 3 is configured such that the generated radiation beam is emitted from the second beam outlet 202 via the second collimator 302 toward the second detector 11 at the predetermined position or at the predetermined distance.

According to some alternative embodiments of the present disclosure, the accelerator in the accelerator cabin 3 includes a transmission target, and the accelerator cabin 3 is provided with a first collimator 301 and a second collimator 302 corresponding to or aligned with the first beam outlet 201 and the second beam outlet 202 respectively. In the container truck scanning mode, the accelerator is configured such that electrons in an acceleration tube interact with the transmission target to generate a radiation beam, and the radiation beam is emitted from the first beam outlet 201 via the first collimator 301.

According to some alternative embodiments of the present disclosure, the accelerator in the accelerator cabin 3 includes a transmission target, and the accelerator cabin 3 is provided with a first collimator 301 and a second collimator 302 corresponding to or aligned with the first beam outlet 201 and the second beam outlet 202 respectively. In one train scanning mode, the accelerator is configured such that electrons in an acceleration tube interact with the transmission target to generate a radiation beam, and the radiation beam is emitted from the second beam outlet 202 via the first collimator 301. It may be understood that, in this embodiment, the accelerator cabin 3 is rotated by 90° relative to the rear cabin 2, as shown in FIG. 2. In this embodiment, the geometric center of gravity of the accelerator cabin 3 is preferably disposed on the central axis of the mobile body 1, so as to maintain the counterweight balance of the mobile body 1 during the rotation process.

According to some alternative embodiments of the present disclosure, the accelerator in the accelerator cabin 3 includes a reflection target, and the accelerator cabin 3 is provided with a first collimator 301 and a second collimator 302 corresponding to the first beam outlet 201 and the second beam outlet 202 respectively. In another train scanning mode, the accelerator is configured such that electrons in an acceleration tube interact with the reflection target to generate a radiation beam, and the radiation beam is emitted from the second beam outlet 202 via the second collimator 302. It may be understood that, in this embodiment, neither the rear cabin 2 nor the accelerator cabin 3 rotates, and the beam emission direction of the radiation beam may be changed only by selecting the type of target materials.

According to some embodiments of the present disclosure, a beam emission direction of the radiation beam via the first beam outlet 201 is perpendicular to a beam emission direction of the radiation beam via the second beam outlet 202.

In the present disclosure, the first collimator 301 and the second collimator 302 may be collimation slits provided on the cabin body of the accelerator cabin, or may be collimators externally provided directly or indirectly on the accelerator cabin 3 and capable of rotating synchronously with the accelerator cabin 3, for constraining the radiation beam into a fan-shaped beam. The first beam outlet 201 and the second beam outlet 202 may be elongated openings provided on the rear cabin 2.

In the present disclosure, it may be understood that the accelerator in the accelerator cabin 3 may include both a transmission target and a reflection target, and the transmission target or the reflection target may be selected for use according to actual conditions. For example, the transmission target and the reflection target are preferably plate-shaped and are disposed at an outlet of the acceleration tube. For example, in the container truck scanning mode of FIG. 1 and the train scanning mode of FIG. 2, the plate-shaped transmission target is disposed to be perpendicular to an axial direction of the acceleration tube, and accelerated electrons interact with the transmission target to generate a radiation beam traveling straight along the axial direction of the acceleration tube. At this time, the plate-shaped reflection target may be disposed to be parallel to the axial direction of the acceleration tube. For another example, in another train scanning mode of FIG. 3, neither the accelerator cabin nor the accelerator rotates, and the transmission target in FIG. 2 is replaced with the plate-shaped reflection target. The reflection target is disposed to form an included angle of 45° with the axial direction of the acceleration tube, and accelerated electrons interact with the reflection target to generate a radiation beam emitted in a direction perpendicular to the axial direction of the acceleration tube. At this time, the plate-shaped transmission target may be disposed to be parallel to the axial direction of the acceleration tube. It should be noted that the axial direction of the acceleration tube refers to a direction in which electrons are accelerated in the acceleration tube.

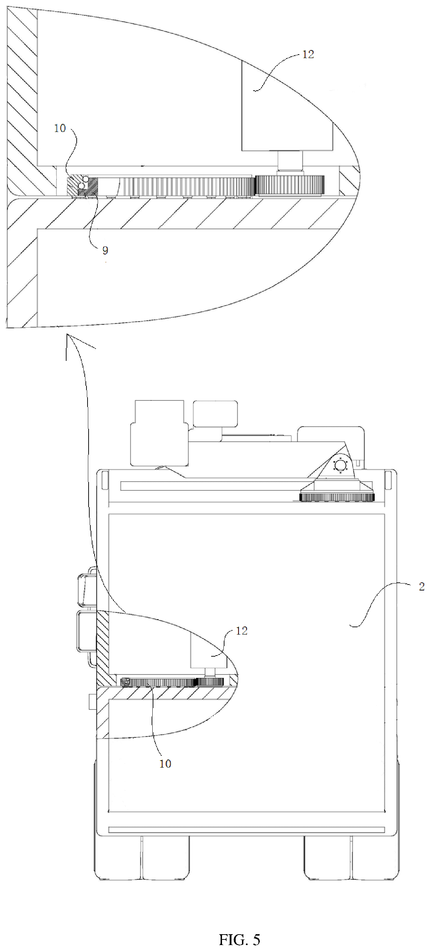

FIG. 5 shows a schematic structural diagram of a rotating assembly of the mobile inspection device shown in FIG. 1.

According to some embodiments of the present disclosure, as shown in FIG. 5, respective rotating assemblies and drive assemblies 12 are provided between the rear cabin 2 and the mobile body 1, and between the accelerator cabin 3 and the rear cabin 2, such that the rear cabin 2 is horizontally rotatably connected to the mobile body 1, and the accelerator cabin 3 is horizontally rotatably connected to the rear cabin 2.

According to some embodiments of the present disclosure, as shown in FIG. 5, the rotating assembly includes: a fixed ring 9 and a slewing ring gear 10. The fixed ring 9 is disposed on the mobile body 1 or on the rear cabin 2. The slewing ring gear 10 and the fixed ring 9 are coaxially sleeved, and the slewing ring gear 10 is connected to the rear cabin 2 or the accelerator cabin 3. The drive assembly 12 is in transmission connection with the slewing ring gear 10 to drive the rear cabin 2 or the accelerator cabin 3 to rotate. It may be understood that the rotation of the rear cabin 2 and the rotation of the accelerator cabin 3 may be controlled independently.

In this embodiment, the accelerator cabin 3 is connected to the slewing ring gear 10. The rear cabin 2 is connected to the fixed ring 9. The slewing ring gear 10 and the fixed ring 9 are coaxially sleeved. The rotating assembly composed of the slewing ring gear 10 and the fixed ring 9 has good axial load-bearing capacity, so as to ensure that the accelerator cabin 3 rotates smoothly in the horizontal plane without any positional deviation in the vertical direction. One of the slewing ring gear 10 and the fixed ring 9 is provided with an annular guide rail, and the other is seated on the annular guide rail, such that a relative position between the slewing ring gear 10 and the fixed ring 9 is not prone to deviation, while a frictional resistance between the two is small, thereby ensuring stable positioning of the accelerator cabin 3 during the rotation process and improving positioning accuracy.

According to some embodiments of the present disclosure, the drive assembly 12 includes a hydraulic motor or a geared motor.

According to an inventive concept of another aspect of the present disclosure, a mobile inspection system is further provided, including: the mobile inspection device as described above; and a second detector disposed on a carrier independent of the mobile body. The carrier is a mobile carrier or a fixed carrier.

According to the mobile inspection device and the mobile inspection system of embodiments of the present disclosure, by providing the rear cabin with the first beam outlet and the second beam outlet, and by configuring the rear cabin to rotate to the counterweight position in the container truck scanning mode and rotate to the retracted position in the train scanning mode, combined with improvements to the accelerator cabin/accelerator, the accelerator cabin of the mobile inspection device emits radiation beams from two directions via the first beam outlet and the second beam outlet respectively in the container truck scanning mode and the train scanning mode, and scans container trucks or trains respectively. With only one mobile inspection device, in cooperation with a detector arm of a related train-series product, the scanning device may achieve, in addition to conventional container truck scanning, rapid relocation and a dual-scanning mode applicable to train scanning.

So far, the embodiments of the present disclosure have been described in detail with reference to the accompanying drawings. It should be noted that any implementations not shown or described in the accompanying drawings or the specification are forms known to those skilled in the art and will not be described in detail. In addition, the above-mentioned definitions of various components are not limited to the various specific structures, shapes, or methods mentioned in the embodiments, and may be simply modified or substituted by those skilled in the art.

Those skilled in the art will appreciate that various combinations and/or incorporations of features recited in various embodiments and/or claims of the present disclosure may be made, even if such combinations or incorporations are not explicitly recited in the present disclosure. In particular, without departing from the spirit and principles of the present disclosure, various combinations and/or incorporations of the features recited in the various embodiments and/or claims of the present disclosure may be made. All of the combinations and/or incorporations fall within the scope of the present disclosure.

The above-mentioned specific embodiments have described in detail the objectives, technical solutions and advantages of the present disclosure. It should be noted that the above are only specific embodiments of the present disclosure and are not intended to limit the present disclosure. Any modifications, equivalent substitutions, improvements, and the like made within the spirit and scope of the present disclosure shall be included in the scope of protection of the present disclosure.

## Claims

1. A mobile inspection device, comprising a mobile body, a rear cabin, an accelerator cabin and a detector arm, wherein the mobile inspection device has a container truck scanning mode and a train scanning mode that are switchable between each other;
wherein the rear cabin is rotatably disposed on the mobile body, and the rear cabin is configured to rotate to a counterweight position in the container truck scanning mode and rotate to a retracted position in the train scanning mode;
the detector arm is disposed on the mobile body, and the detector arm is provided with a first detector; the detector arm is configured to have a folded state and a deployed state, and the detector arm is in the deployed state in the container truck scanning mode and in the folded state in the train scanning mode; and
the accelerator cabin is disposed in the rear cabin, and the accelerator cabin is configured to emit radiation beams from a first beam outlet and a second beam outlet of the rear cabin in the container truck scanning mode and the train scanning mode, respectively.

2. The mobile inspection device according to claim 1, wherein in the container truck scanning mode, the accelerator cabin is configured to be fixed in the rear cabin, and the rear cabin is configured to rotate synchronously with the accelerator cabin relative to the mobile body, so as to achieve counterweight balance between the rear cabin and the detector arm.

3. The mobile inspection device according to claim 1, wherein in the train scanning mode, the accelerator cabin is configured to emit the radiation beam from the second beam outlet toward a second detector at a predetermined position.

4. The mobile inspection device according to claim 3, wherein in the train scanning mode, the rear cabin is configured to be stationary relative to the mobile body, and the accelerator cabin is configured to rotate relative to the rear cabin, so as to emit the radiation beam from the second beam outlet toward the second detector at the predetermined position.

5. The mobile inspection device according to claim 2, wherein an accelerator in the accelerator cabin comprises a transmission target, and the accelerator cabin is provided with a first collimator and a second collimator corresponding to the first beam outlet and the second beam outlet respectively; and
in the container truck scanning mode, the accelerator is configured such that electrons in an acceleration tube interact with the transmission target to generate a radiation beam, and the radiation beam is emitted from the first beam outlet via the first collimator.

6. The mobile inspection device according to claim 3 or 4, wherein an accelerator in the accelerator cabin comprises a transmission target, and the accelerator cabin is provided with a first collimator and a second collimator corresponding to the first beam outlet and the second beam outlet respectively; and
in the train scanning mode, the accelerator is configured such that electrons in an acceleration tube interact with the transmission target to generate a radiation beam, and the radiation beam is emitted from the second beam outlet via the first collimator.

7. The mobile inspection device according to claim 3, wherein an accelerator in the accelerator cabin comprises a reflection target, and the accelerator cabin is provided with a first collimator and a second collimator corresponding to the first beam outlet and the second beam outlet respectively; and
in the train scanning mode, the accelerator is configured such that electrons in an acceleration tube interact with the reflection target to generate a radiation beam, and the radiation beam is emitted from the second beam outlet via the second collimator.

8. The mobile inspection device according to claim 1, wherein a beam emission direction of the radiation source via the first beam outlet is perpendicular to a beam emission direction of the radiation beam via the second beam outlet.

9. A mobile inspection system, comprising:
the mobile inspection device according to any one of claims 1 to 8; and
a second detector disposed on a carrier independent of the mobile body, wherein the carrier is a mobile carrier or a fixed carrier.
